# EUROPÄISCHE PATENTSCHRIFT

(11) **EP 1 141 558 B1**
(45) Veröffentlichungstag und Bekanntmachung des Hinweises auf die Patenterteilung: **28.08.2002**
(21) Anmeldenummer: 99966931.0
(22) Anmeldetag: 08.12.1999
(51) Int. Cl.: F16B 12/24

(54) **BEFESTIGUNGSZAPFEN FÜR DIE MONTAGE VON WERKSTÜCKEN, INSBESONDERE VON MÖBELBESCHLÄGEN**
FASTENING PIN FOR ASSEMBLING WORK PIECES, ESPECIALLY FURNITURE FITTINGS
CHEVILLE DE FIXATION POUR LE MONTAGE DE PIECES, EN PARTICULIER DE FERRURES DE MEUBLES

(30) Priorität: 14.01.1999 DE 29900494 U
(43) Veröffentlichungstag der Anmeldung: 10.10.2001
(73) Patentinhaber: MEPLA-WERKE LAUTENSCHLÄGER GmbH & Co. KG, D-64354 Reinheim (DE)
(72) Erfinder: LAUTENSCHLÄGER, Gerhard, Wilhelm, D-64395 Brensbach-Wersau (DE)
(74) Vertreter: Helber, Friedrich G., Dipl.-Ing.
(86) Internationale Anmeldenummer: EP9909653
(87) Internationale Veröffentlichungsnummer: WO00042328

(56) Entgegenhaltungen:
- DE-A- 3 245 948
- DE-A- 19 505 311
- DE-A- 19 611 256
- DE-A- 19 614 890
- US-A- 5 556 220

## Beschreibung

Die Erfindung betrifft einen in einer Bohrung in einem Untergrund montierbarer Befestigungszapfen für die Befestigung von Werkstücken, insbesondere Möbelbeschlägen mit einer spreizdübelartig aufweitbaren dünnwandigen Spreizhülse aus Kunststoff, in welche ein langgestreckter Schaft eines Betätigungselements eingreift, welches an seinem beschlagseitig aus der Spreizhülse herausgeführten Ende mit Mitteln zur Verdrehung des Betätigungselements relativ zur Spreizhülse versehen ist, wobei der langgestreckte Schaft des Betätigungselements eine Anzahl von in Schaft-Längsrichtung aufeinanderfolgend vorgesehenen, sich zum bohrungsmündungsseitigen Ende konisch verjüngenden Spreizabschnitten aufweist, und die den langgestreckten Schaft des Betätigungselements aufnehmende Mittelöffnung der Spreizhülse komplementär zum in ihr angeordneten Abschnitt des Betätigungselements geformt ist.

Für die Montage von Beschlägen, insbesondere Möbelbeschlägen an Möbelstücken hat sich die Verwendung von an den Beschlägen vorgesehenen Befestigungszapfen, die in zugeordnete Befestigungsbohrungen im Befestigungsbereich des Möbelstücks eingebracht oder eingesetzt und dann spreizdübelartig aufgespreizt werden, in großem Umfang durchgesetzt, weil eine solche Befestigungsart - zumindest in Möbelstücken aus dem in neuerer Zeit zunehmend verwendeten Spanplattenmaterial - höhere Beanspruchungen erlaubt, als eine reine Schraubbefestigung.

So ist es beispielsweise bekannt, topfförmige Einlaßgehäuse oder Montageplatten von modernen Möbelscharnieren mittels solcher spreizdübelartiger Befestigungszapfen zu montieren, wobei der eigentliche, in die Befestigungsbohrung einzuführende Bolzenkörper in Form einer dickwandigen Spreizhülse mit äußeren ringförmig umlaufenden, im Querschnitt sägezahnförmigen Rippen versehen ist, die sich beim Spreizen der Spreizhülse durch eine in ihrer Mittelöffnung eingedrehte Befestigungsschraube noch etwas in die Wandung der Befestigungsbohrung eingraben sollen (DE 31 26 614 A1). Anstelle des Aufspreizens der Spreizhülse durch Eindrehen des Schafts einer Befestigungsschraube in die Mittelöffnung sind Lösungen bekannt (AT-PS 270 439), bei denen die Aufweitung der dickwandigen Spreizhülse in der Befestigungsbohrung durch Einziehen eines in das bohrungsinnere Ende der Durchgangsöffnung der Spreizhülse eingesetzten konischen Spreizkörpers mittels einer in die Gewindebohrung im Spreizkörper eingreifenden Befestigungsschraube erfolgt. Die bekannten Befestigungszapfen müssen relativ dickwandige Spreizhülsen aufweisen, so daß auch die Befestigungsbohrungen einen entsprechend großen Durchmesser haben müssen. Zum Spreizen in hinreichendem Maße müssen die Befestigungsschrauben jeweils solange gedreht werden, bis die für die angestrebte feste Verankerung in der Befestigungsbohrung erforderliche Spreizung erreicht ist. Das ist - insbesondere dann, wenn mit von Hand betätigten Schraubendrehern gearbeitet werden muß - mühsam und der Grad der erfolgten Aufspreizung und somit auch die Ausreißfestigkeit des Befestigungszapfens aus der Befestigungsbohrung ist damit auch nicht leicht abzuschätzen.

Einen deutlich geringeren Durchmesser als die vorstehend geschilderten spreizdübelartigen Befestigungszapfen hat der weiterentwickelte Befestigungszapfen der eingangs erwähnten Art (DE 195 05 311 A1), der infolge der größeren Anzahl von über die Länge des Schafts des Betätigungselements verteilt vorgesehenen und mit jeweils zugeordneten komplementären Abschnitten der Spreizhülse zusammenwirkenden konischen Spreizabschnitten eine Spreizung der dünnwandig ausgebildeten Spreizhülse im wesentlichen über ihre gesamte Länge und damit einen festen Sitz in der zugehörigen, infolge des verringerten Durchmessers der Befestigungsbohrung mit geringerem Aufwand herstellbaren Befestigungsbohrung ermöglicht. Außerdem ist für den Spannvorgang eine Drehung des Betätigungselements von weniger als 360° erforderlich. Der bekannte Befestigungszapfen hat in Versuchen seine Funktionsfähigkeit, insbesondere auch im Hinblick auf den zu erzielenden festen Sitz und die bei den älteren bekannten dickwandigen Befestigungszapfen bisweilen kritische Demontierbarkeit erwiesen. Die im Spritzgußverfahren aus einem geeigneten Kunststoff hergestellte Spreizhülse des Befestigungszapfens ist jedoch - gerade wegen ihres an sich angestrebten geringen Durchmessers und ihrer Dünnwandigkeit und dem Erfordernis der Ausbildung der Mittelbohrung mit zu den konischen Spreizabschnitten komplementär konischen Vertiefungen - herstellungstechnisch nur schwer zu beherrschen.

Bei einem bekannten Verbindungsbeschlag für plattenförmige Werkstücke ist es bekannt (DE 196 14 890 A1) in einer einstückigen starren und auf ihrem äußeren Umfang mit einem Einschraubgewinde versehenen Verbinderhülse mit zylindrischer Ausnehmung einen Einsatz aus zwei durch einen dünnen Kunststofffilm verbundene Kunststoff-Halbschalen anzuordnen, deren Innenflächen mit im Querschnitt sägezahnförmigen Aussparungen versehen sind, in welche komplementär sägezahnförmige Vorsprunge eines geschlitzten Verbindungsstifts einrastbar sind. Ein Spreizen dieser Verbinderhülsen zur Festlegung in einer Befestigungsbohrung ist nicht möglich. Vielmehr müssen die bekannten Verbinderhülsen mittels des an ihrem äußeren Umfang vorgesehenen Gewindes in die zugehörigen Befestigungsbohrungen im Werkstück eingeschraubt werden.

Der Erfindung liegt die Aufgabe zugrunde, den bekannten Befestigungszapfen so weiterzubilden, daß er bei unverändert geringen Abmessungen und sicherer Funktion deutlich einfacher herstellbar und universeller einsetzbar ist.

Ausgehend von einem Befestigungszapfen der eingangs erwähnten Art wird diese Aufgabe erfindungsgemäß dadurch gelöst, daß die Spreizhülse zwei nur an ihrem in Einführrichtung in die zugehörige Befestigungsbohrung vorn liegenden Ende durch einen flexiblen Steg integral verbundene Hülsenhälften aufweist. Die Herstellung im Spritzgußverfahren erfolgt also so, daß die Spreizhülse in hälftig aufgeklappter Form erfolgt, wofür dann Spritzgußformen relativ einfacher Ausgestaltung verwendet werden können, mit welchen die dünnwandigen Hülsenhälften zuverlässig und auch mit hohen Schußzahlen hergestellt werden können. Die Montage der gebrauchsfertigen Befestigungszapfen kann dann so erfolgen, daß der Schaft des Betätigungselements in eine Hülsenhälfte eingelegt und dann die andere Hülsenhälfte auf die erste Hülsenhälfte hinübergeklappt wird, wobei der die Hülsenhälften verbindende integrale Steg als Filmscharnier wirkt. Der zusammengeklappte Befestigungszapfen kann dann in dieser Form im Werkstück, z.B. in einer Bohrung eines Möbelbeschlagteils, eingesetzt und dadurch gegen ungewolltes Öffnen der Hülsenhälften gesichert werden. Alternativ ist auch eine gesonderte Sicherung der zusammengeklappten Hülsenhälften durch einen im Bereich des beschlagseitigen rückwärtigen Endes vorzusehenden Ring ein Klebeband etc. möglich.

Die Spreizhülse ist zweckmäßig an ihrem dem vorn liegenden Ende gegenüberliegenden Ende mit Mitteln zur drehfesten Montage am zum montierenden Werkstück versehen. Im einfachsten Fall kann die Spreizhülse im Befestigungsbereich an einem Möbelbeschlag mit einem von der reinen Kreisform abweichenden Querschnitt, zum Beispiel einem abgeflachten oder polygonalen Querschnitt ausgebildet werden, so daß sie in einer komplementär ausgebildeten Aufnahmeöffnung des Möbelbeschlags undrehbar gehalten ist.

Die sich konisch verjüngenden Spreizabschnitte des Schafts des bevorzugt aus Metall hergestellten Befestigungselements werden dabei zweckmäßig - wieder in Übereinstimmung mit dem bekannten Befestigungszapfen - von jeweils einem Teil einer den Schaft über zumindest einen Teil seiner Länge umgebenden rampenartig geneigten Schraubenfläche gebildet, welcher eine komplementär rampenförmig geneigte Schraubenfläche in der Wandung der Mittelöffnung der Spreizhülse zugeordnet ist.

Auf der Außenfläche der Spreizhülse wird mit Vorteil eine im Steigungssinn und im Steigungsmaß der komplementären Schraubenfläche der Wandung der Mittelöffnung entsprechende, in Längsrichtung jedoch um etwa eine halbe Ganghöhe versetzte schraubenförmig umlaufende niedrige Nut vorgesehen, welche durch die Unterbrechung ihrer im übrigen zylindrischen Außenfläche die Haftung in der zugehörigen Befestigungsbohrung in gespreiztem Zustand gegenüber einer rein zylindrischen Außenfläche deutlich erhöht.

Die Spreizhülse weist in bevorzugter Weiterbildung der Erfindung an ihrem dem vorn liegenden Ende gegenüberliegenden Ende einen gegenüber dem Außendurchmesser der Spreizhülse im Durchmesser vergrößerten, jeweils zur Hälfte in den Hülsenhälften ausgebildeten Halterungsabschnitt auf, in welchem wenigstens eine Aussparung vorgesehen ist, in welche jeweils ein vom Werkstück vortretender Ansatz zum Eingriff bringbar ist. Insbesondere dann, wenn der erfindungsgemäße Befestigungszapfen in Möbelbeschlägen aus relativ dünnwandigem Metallblech montiert werden soll, ist diese Ausgestaltung vorteilhaft, da dann die Befestigungsöffnung im Möbelbeschlag jeweils nur im Bereich der Aussparung(en) des Halterungsabschnitts mit einem angesetzten vorspringenden Lappen versehen sein muß, welcher in die jeweils zugeordnete Aussparung eingreift.

Am betätigungsseitigen Ende des Schafts des Betätigungselements ist zweckmäßig ein im Durchmesser gegenüber dem Schaft vergrößerter, auf der Oberfläche des im Durchmesser vergrößerten Halterungsabschnitts der Spreizhülse aufliegenden Kopf mit Mitteln zum Drehen des Betätigungselements vorgesehen. Die Mittel zum Drehen des Befestigungszapfens können beispielsweise von den üblichen in den Köpfen von Schrauben vorgesehenen Schraubenzieherschlitzen, Kreuzschlitzen etc. gebildet werden.

Am Betätigungselement wird zweckmäßig ein radial vom Kopf vortretender Ansatz ausgebildet dem ein von der Oberseite des Werkstücks vortretender Vorsprung als Gegenanschlag zur Begrenzung der Drehung des Betätigungselements auf einen Winkel von weniger als 360° zugeordnet sein kann. Alternativ kann der Anschlag am Betätigungselement auch mit einem am im Durchmesser vergrößerten Halterungsabschnitt der Spreizhülse ausgebildeten Gegenanschlag zusammenwirken.

Die Erfindung ist in der folgenden Beschreibung eines Ausführungsbeispiels in Verbindung mit der Zeichnung näher erläutert, und zwar zeigt:
- Fig. 1: eine Seitenansicht eines erfindungsgemäßen Befestigungszapfens;
- Fig. 2: eine Seitenansicht der Spreizhülse des Befestigungszapfens in der bei der Herstellung im Spritzgußverfahren erzeugten aufgeklappten Form ihrer Hülsenhälften;
- Fig. 3: eine Ansicht auf die zusammen die spätere Mittelöffnung der Spreizhülse bildende Innenseiten der Hülsenhälften;
- Fig. 4: eine Schnittansicht, gesehen in Richtung der Pfeile 4-4 in Figur 3;
- Fig. 5: eine Ansicht, gesehen in Richtung des Pfeils 5 in Figur 2;
- Fig. 6: eine vergrößerte Teilansicht des in Figur 4 innerhalb des strichpunktierten Kreises 6 gelegenen Bereichs der Hülsenhälften der Spreizhülse;
- Fig. 7: eine Seitenansicht des Betätigungselements des Befestigungszapfens von Figur 1;
- Fig. 8: eine Ansicht des Betätigungselements gemäß Figur 7 in um 180° um die Längsmittelachse gedrehter Stellung, wobei der Kopf des Betätigungselements partiell aufgebrochen dargestellt ist, um den im Kopf vorgesehenen Kreuzschlitz zu veranschaulichen;
- Fig. 9: eine Ansicht des Betätigungselements, gesehen in Richtung des Pfeils 9 in Figur 7; und
- Fig. 10: eine Schnittansicht durch den Befestigungsflansch des Scharniertopfs eines Möbelscharniers im Bereich seiner Aufnahmeöffnung für einen erfindungsgemäßen Befestigungszapfen mit eingesetztem Befestigungszapfen, dessen Spreizhülse ebenfalls im Längsmittelschnitt dargestellt ist.

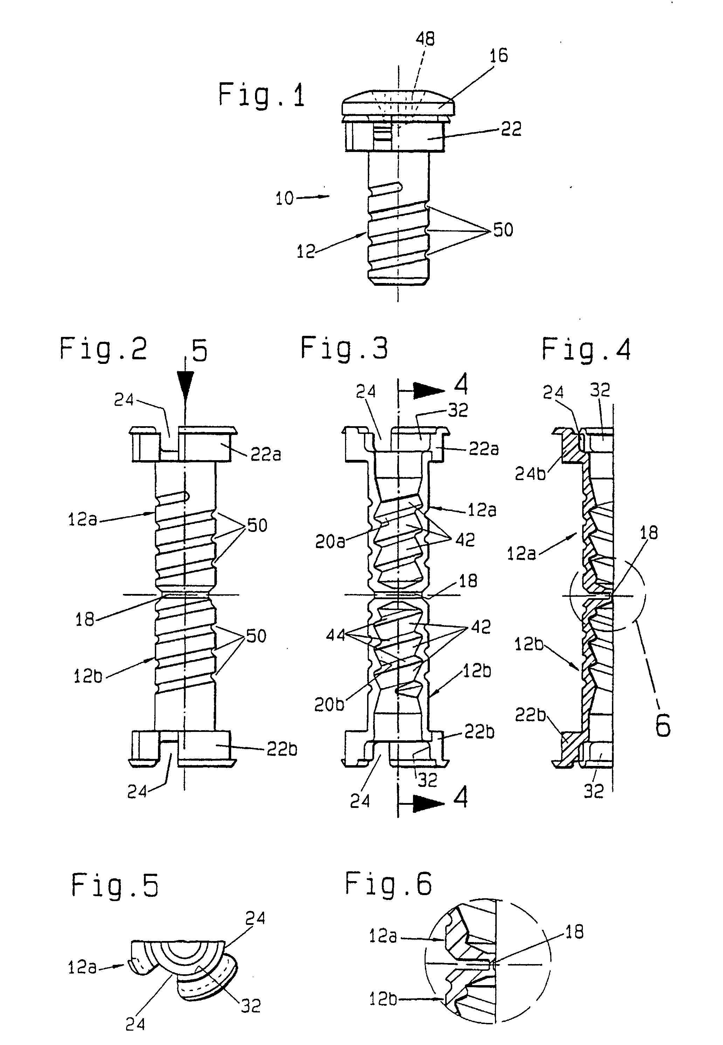

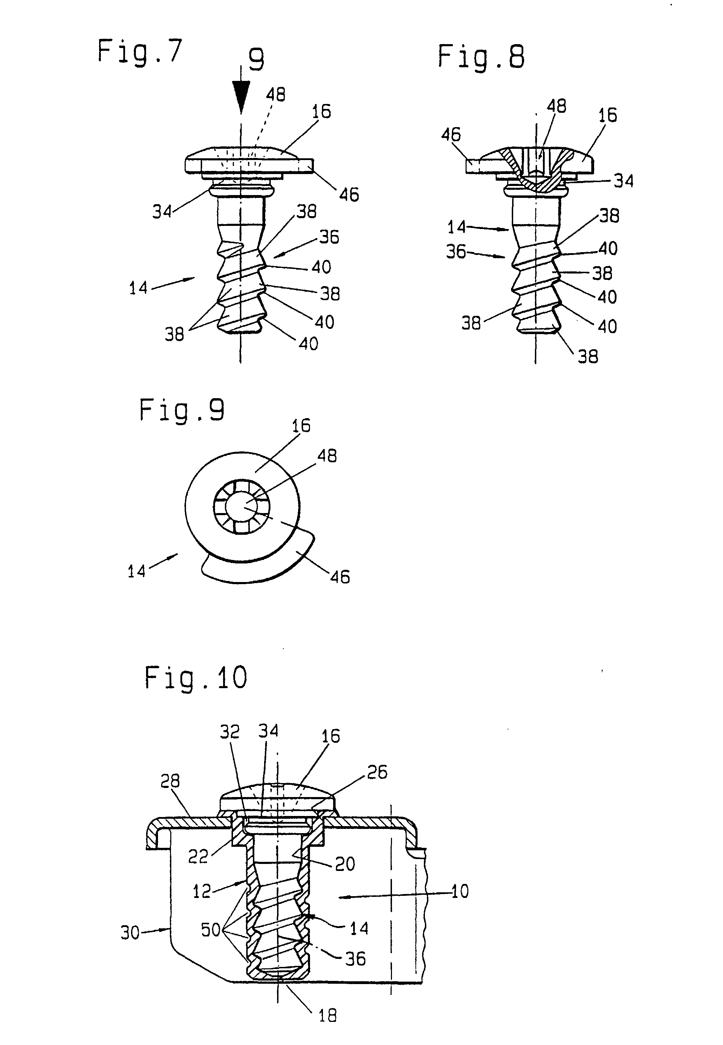

In Figur 1 ist ein in seiner Gesamtheit mit 10 bezeichnetes Ausführungsbeispiel eines erfindungsgemäßen Befestigungszapfens in einer Seitenansicht gezeigt. Der Befestigungszapfen 10 setzt sich aus zwei Teilen, nämlich einer - nachstehend in Verbindung mit den Figuren 2 bis 6 noch näher erläuterten - Spreizhülse 12 und einem - in den Figuren 7 bis 9 gesondert dargestellten - Betätigungselement 14 zusammen, von denen in Figur 1 nur der nicht in der Spreizhülse 12 aufgenommene Teil, nämlich ein Betätigungs-Kopf 16 gezeigt ist, an welchen ein Drehwerkzeug, zum Beispiel ein Schraubenzieher, angesetzt werden kann.

Die Spreizhülse 12 des Befestigungszapfens 10 ist in den Figuren 2 bis 6 in der Form gezeigt, in der sie bei der Herstellung im Spritzgußverfahren entsteht. Es ist ersichtlich, daß die Spreizhülse 12 aus zwei Hülsenhälften 12a und 12b besteht, die lediglich an den in den Figuren 2 bis 4 mittleren zusammentreffenden Ende durch einen integral angespritzten dünnen flexiblen Steg 18 miteinander verbunden sind, der als Scharnier wirkt, so daß die in den Zeichnungsfiguren 2 bis 4 unten liegenden Hülsenhälfte 12b um 180° nach oben auf die obere Hülsenhälfte 12a geklappt werden kann und in dieser Stellung dann die Spreizhülse 12 bildet. Die Spreizhülse weist dann im zusammengeklappten Zustand eine Mittelöffnung 20 (Figur 10) auf, die wiederum von Öffnungshälften 20a, 20b in den Hülsenhälften 12a, 12b gebildet wird. Die in dem in Figur 1 gezeigten zusammengeklappten Zustand befindliche Spreizhülse 12 weist an ihrem, dem durch den Steg 18 zusammengehaltenen vorderen Ende gegenüberliegenden Ende einen gegenüber dem Außendurchmesser der eigentlichen, in eine Befestigungsbohrung einzusetzenden Spreizbereich im Durchmesser vergrößerten Halterungsabschnitt 22 auf, der wiederum von entsprechenden Abschnittshälften 22a bzw. 22b gebildet wird. Im Halterungsabschnitt 22 sind beim Befestigungszapfen 10 in Umfangsrichtung in gleichmäßigen Winkelabständen versetzt drei Aussparungen 24 vorgesehen, welche dazu dienen, den Halterungsbereich in einer entsprechend geformten Aufnahmeöffnung in einem Werkstück, und zwar in dem in Figur 10 veranschaulichten Fall im Befestigungsflansch des Scharniertopfs eines Möbelscharniers drehfest zu haltern. Zu diesem Zweck ist die den Befestigungszapfen 10 halternde Aufnahmeöffnung 26 im Befestigungsflansch 28 des Scharniertopfs 30 mit (in Figur 10 nicht erkennbaren) von der Aufnahmeöffnung 26 radial nach innen vorspringenden Lappen versehen, welche in die Aussparung 24 eingreifen.

Das in den Figuren 7 bis 9 gesondert dargestellte Betätigungselement 14 weist unterhalb des Betätigungs-Kopfs 16 einen in einer im wesentlichen zylindrischen niedrigen Eintiefung 32 im Halterungsabschnitt 22 der Spannhülse 12 drehbar aufgenommenen Lagerabschnitt 34, an welchem ein in die Mittelöffnung 20 der Spannhülse 12 eingreifender Schaft 36 angesetzt ist. Der Schaft ist über den größten Teil seiner Länge mit einer Anzahl von sich insgesamt zu einer Schraubenfläche ergänzenden Spreizabschnitten 38 versehen, die sich in Richtung zum Kopf 16 konisch verjüngen. Die sich konisch verjüngenden Spreizabschnitte 38 sind durch jeweils einen sich in entgegengesetzter Richtung konisch verjüngenden Verbindungsabschnitt 40 aneinander angeschlossen, die sich ihrerseits ebenfalls insgesamt zu einer Schraubenfläche ergänzen. Insgesamt ähneln die sich zur Schraubenfläche ergänzenden Spreiz- und Verbindungsabschnitte also einem auf dem Schaft 30 aufgebrachten Gewinde, wobei aber die Flanken der Spreizabschnitte mit der Längsmittelachse des Schafts 36 einen deutlich geringeren Winkel in der Größenordnung von etwa 25° einschließen, als die entgegengesetzt geneigten Verbindungsabschnitte, bei denen der Winkel zur Längsmittelachse etwa 40° betragen möge. Außerdem ist die Steigung der Schraubenfläche relativ groß gewählt,, so daß bei der hier möglichen Verdrehung des Betätigungselements 14 eine hinreichende, die Spreizhülse 12 auseinanderdrängende Anzugskomponente der Längsmittelachse des Betätigungselements erzeugt wird.

Die Mittelöffnung 20 der Spreizhülse 12 ist komplementär zum Schaft 36 des Betätigungselements 14 ausgebildet, d.h. den Spreizabschnitten 38 sind sich komplementär konisch verjüngende Mittelöffnungs-Abschnitte 42 und den Verbindungsabschnitten 40 komplementär konische Abschnitte 44 der Mittelöffnung zugeordnet. Es ist ersichtlich, daß bei einer Verdrehung des Kopfs 16 des Betätigungselements 14 - bezogen auf Figur 9 - im Uhrzeigersinn die Spreizabschnitte 38 ihre Lage relativ zu den komplementären Mittelöffnungs-Abschnitten 42 derart verändern, daß eine Aufspreizung der Spreizhülse 12 resultiert, welche die Spreizhülse aber nicht nur - wie bei den bekannten älteren spreizdübelartigen Befestigungszapfen - von einem Ende aus aufspreizt, sondern praktisch über ihre gesamte Länge mit den zu den Spreizabschnitten 38 komplementären Abschnitten 42, so daß die Spreizhülse 12 mit gleichmäßigem Wandungsdruck über den größten Teil ihrer Länge an der Wandung einer Befestigungsbohrung angedrückt wird.

Am Kopf 16 des Betätigungselements 14 ist ein radial vortretender Ansatz 46 vorgesehen, der in Verbindung mit einem in Figur 10 hinter dem Kopf 16 liegenden und deshalb nicht sichtbaren, von der Oberseite des Befestigungsflanschs 28 des Scharniertopfs 30 vortretenden Vorsprung als Gegenanschlag den Drehwinkel des Betätigungselements 14 zur Spreizhülse 12 auf einen deutlich unter 360° liegenden Winkel begrenzt, welcher ausreicht, um die Spreizhülse 12 in hinreichendem Maße aufzuweiten, um sie in einer zugeordneten Befestigungsbohrung festzulegen.

In Figur 8 ist der Kopfs 16 des Betätigungselements 14 aufgebrochen und läßt so den dort vorgesehenen Kreuzschlitz 48 erkennen. Das Betätigungselement 14 ist also mittels eines im Kreuzschlitz 48 angesetzten Kreuzschlitz-Schraubendrehers im oder gegen den Uhrzeigersinn drehbar, wobei die Spreizhülse aufgeweitet bzw. wieder entspannt wird.

In der äußeren, grundsätzlich zylindrischen Umfangsfläche des in eine zugehörige Befestigungsbohrung einzusetzenden Befestigungsteils der Spreizhülse 12 ist eine schraubenförmig umlaufende niedrige Nut 50 vorgesehen, deren Steigungssinn und Steigungsmaß etwa der komplementären Schraubenfläche in der Wandung der Mittelöffnung entspricht, in Längsrichtung jedoch um eine halbe Ganghöhe zur Schraubenfläche der Mittelöffnung versetzt ist.

Es ist ersichtlich, daß im Rahmen des Erfindungsgedankens Abwandlungen und Weiterbildungen des beschriebenen Ausführungsbeispiels verwirklichbar sind, welche sich beispielsweise auf die spezielle Ausgestaltung der Spreizhülse beziehen können. Die beim dargestellten Ausführungsbeispiel relativ dünnwandig ausgebildete Spreizhülse kann für im Durchmesser entsprechend größer bemessene Befestigungsbohrungen auch eine größere Wandstärke aufweisen. Neben den bei der Erläuterung des Standes der Technik erwähnten Anwendungsfällen als Befestigungszapfen von Scharniertöpfen von Scharnieren oder von Montageplatten kommt auch eine Verwendung im Zusammenhang mit anderen Beschlägen, beispielsweise Verbindungsbeschlägen oder Konstruktionsbeschlägen für Fachböden, Frontblenden-Halterungen von Schubladen etc. in Frage.

## Patentansprüche

1. In einer Bohrung in einem Untergrund montierbarer Befestigungszapfen (10) für die Befestigung von Werkstücken, insbesondere Möbelbeschlägen mit einer spreizdübelartig aufweitbaren dünnwandigen Spreizhülse (12) aus Kunststoff, in welche ein langgestreckter Schaft (36) eines Betätigungselements (14) eingreift, welches an seinem beschlagseitig aus der Spreizhülse (12) herausgeführten Ende mit Mitteln zur Verdrehung des Betätigungselements (14) relativ zur Spreizhülse (12) versehen ist, wobei der langgestreckte Schaft (36) des Betätigungselements (14) eine Anzahl von in Schaft-Längsrichtung aufeinanderfolgend vorgesehenen, sich zum bohrungsmündungsseitigen Ende konisch verjüngenden Spreizabschnitten (38) aufweist, und die den langgestreckten Schaft (36) des Betätigungselements (14) aufnehmende Mittelöffnung (20) der Spreizhülse (12) komplementär zum in ihr angeordneten Abschnitt des Betätigungselements geformt ist, **dadurch gekennzeichnet,**
**daß** die Spreizhülse (12) zwei nur an ihrem in Einführrichtung in die zugehörige Befestigungsbohrung vorn liegenden Ende durch einen flexiblen Steg (18) integral verbundene Hülsenhälften (12a; 12b) aufweist.

2. Befestigungszapfen nach Anspruch 1, **dadurch gekennzeichnet, daß** die Spreizhülse (12) an ihrem, dem vorn liegenden Ende gegenüberliegenden Ende mit Mitteln zur drehfesten Montage am zu montierenden Werkstück (z.B. 28) versehen ist.

3. Befestigungszapfen nach Anspruch 1 oder 2, **dadurch gekennzeichnet, daß** die sich konisch verjüngenden Spreizabschnitte (38) von jeweils einem Teil einer den Schaft (36) über zumindest einen Teil seiner Länge umgebenden rampenartig geneigten Schraubenfläche gebildet werden, welcher eine komplementär rampenförmig geneigte Schraubenfläche in der Wandung der Mittelöffnung (20) der Spreizhülse (12) zugeordnet ist.

4. Befestigungszapfen nach Anspruch 3, **dadurch gekennzeichnet, daß** auf der Außenfläche der Spreizhülse (12) eine im Steigungssinn und im Steigungsmaß der komplementären Schraubenfläche in der Wandung der Mittelöffnung (20) entsprechende, in Längsrichtung jedoch um etwa eine halbe Ganghöhe versetzte schraubenförmig umlaufende niedrige Nut (50) vorgesehen ist.

5. Befestigungszapfen nach einem der Ansprüche 2 bis 4, **dadurch gekennzeichnet, daß** die Spreizhülse (12) an ihrem dem vorne liegenden Ende gegenüberliegenden ende einen gegenüber dem Außendurchmesser der Spreizhülse (12) im Durchmesser vergrößerte Halterungsabschnitt (22) aufweist, in welchem wenigstnes eine Aussparung (24) vorgesehen ist, in welche jeweils ein vom Werkstück vortretender Ansatz zum Eingriff bringbar ist.

6. Befestigungszapfen nach Anspruch 5, **dadurch gekennzeichnet, daß** am betätigungsseitigen Ende des Schafts (36) des Betätigungselements (14) ein im Durchmesser gegenüber dem Schaft (36) vergrößerter, auf der Oberfläche des im Durchmesser vergrößerten Abschnitts der Spreizhülse (12) aufliegender Kopf (16) mit Mitteln zum Drehen des Betätigungselements (14) vorgesehen ist.

7. Betätigungszapfen nach anspruch 6, **dadurch gekennzeichnet, daß** am Betätigungselement (14) ein radial vom Kopf (16) vortretender Ansatz (46) ausgebildet ist, dem ein von der Oberseite des Werkstücks vortretender Vorsprung als Gegenanschlag zur Begrenzung der Drehung des Betätigungselements (14) auf einen Winkel von weniger als 360° zugeordnet ist.

## Claims

1. Fixing pin (10) which can be mounted in a bore in a substrate for the fixing of workpieces, particularly furniture fittings, with a thin-walled expanding sleeve (12) which is made from plastics material and can expand like a straddling dowel and in which an elongate shank (36) of an actuating element (14) engages, which actuating element is provided on its end which is nearest to the fitting and projects out of the expanding sleeve (12) with means for twisting the actuating element (14) relative to the expanding sleeve (12), wherein the elongate shank (36) of the actuating element (14) has a plurality of expansion sections (38) which succeed one another in the longitudinal direction of the shank and taper conically towards the end nearest to the mouth of the bore, and the central opening (20) of the expanding sleeve (12) which receives the elongate shank (36) of the actuating element (14) has a shape complementary to that of the section of the actuating element disposed in it, **characterised in that** the expanding sleeve (12) has two sleeve halves (12a; 12b) which are integrally connected by a flexible web (18) only at their end which lies at the front in the direction of insertion into the appertaining fixing bore.

2. Fixing pin as claimed in Claim 1, **characterised in that** the expanding sleeve (12) is provided, on its end lying opposite the end which lies at the front, with means for non-rotatable mounting on the workpiece (e.g. 28) to be assembled.

3. Fixing pin as claimed in Claim 1 or 2, **characterised in that** the conically tapered expansion sections (38) are each formed by a part of a screw surface with a ramp-like inclination which surrounds the shank (36) over at least a part of its length and with which is associated a screw surface with a complementary ramp-like inclination in the wall of the central opening (20) of the expanding sleeve (12).

4. Fixing pin as claimed in Claim 3, **characterised in that** on the outer face of the expanding sleeve (12) there is provided a low groove (50) which corresponds in the direction and dimension of the pitch to the complementary screw surface in the wall of the central opening (20) but which in the longitudinal direction runs round helically offset by approximately half a screw pitch.

5. Fixing pin as claimed in one of Claims 2 to 4, **characterised in that** the expanding sleeve (12) has, on its end lying opposite the end which lies at the front, a retaining section (22) which has a larger diameter than that of the expanding sleeve (12) and in which at least one recess (24) is provided, into which a respective projection protruding from the workpiece can be brought into engagement.

6. Fixing pin as claimed in Claim 5, **characterised in that** on the end of the shank (36) of the actuating element (14) at the actuating end there is provided a head (16), which has a larger diameter than that of the shank (36) and which rests on the surface of the section of the expanding sleeve (12) having a larger diameter, with means for turning the actuating element (14).

7. Fixing pin as claimed in Claim 6, **characterised in that** a projection (46) which protrudes radially from the head (16) is constructed on the actuating element (14) and a projection protruding from the upper face of the workpiece is associated with the projection (46) as a counter-stop in order to limit the rotation of the actuating element (14) to an angle of less than 360°.

## Revendications

1. Cheville de fixation (10) pour la fixation de pièces, en particulier de ferrures de meubles, se montant dans un trou fait dans un substrat et comportant une douille expansible à paroi mince (12) en plastique élargissable à la manière d'un goujon expansible, dans laquelle s'engage une tige allongée (36) d'un élément de manoeuvre (14) qui est pourvu à son extrémité qui sort côté ferrure de la douille expansible (12) de moyens de rotation de l'élément de manoeuvre (14) par rapport à la douille expansible (12), la tige allongée (36) de l'élément de manoeuvre (14) présentant un certain nombre de parties d'expansion (38) se suivant dans la direction longitudinale de la tige et se rétrécissant coniquement vers l'extrémité côté orifice du trou, et l'ouverture centrale (20) de la douille expansible (12) qui reçoit la tige allongée (36) de l'élément de manoeuvre (14) étant de forme complémentaire de celle de la partie qui y est placée de l'élément de manoeuvre, **caractérisée par le fait que** la douille expansible (12) présente deux moitiés (12a ; 12b) jointes par un pont flexible (18) seulement à leur extrémité située en avant dans la direction d'introduction dans le trou de fixation correspondant.

2. Cheville de fixation selon la revendication 1, **caractérisée par le fait que** la douille expansible (12) est pourvue, à son extrémité opposée à l'extrémité située en avant, de moyens de montage tournant sur la pièce à monter (par exemple 28).

3. Cheville de fixation selon l'une des revendications 1 et 2, **caractérisée par le fait que** les parties d'expansion se rétrécissant coniquement (38) sont formées chacune par une partie d'une surface hélicoïdale inclinée à la manière d'une rampe, entourant la tige (36) sur au moins une partie de sa longueur et à laquelle est associée une surface hélicoïdale inclinée en forme de rampe complémentaire prévue dans la paroi de l'ouverture centrale (20) de la douille expansible (12).

4. Cheville de fixation selon la revendication 3, **caractérisée par le fait que** sur la surface extérieure de la douille expansible (12) est prévue une gorge basse (50) qui correspond quant au sens et au pas de l'hélice à la surface hélicoïdale complémentaire prévue dans la paroi de l'ouverture centrale (20) et tourne en forme d'hélice dans la direction longitudinale, mais avec un décalage d'environ un demi-pas.

5. Cheville de fixation selon l'une des revendications 2 à 4, **caractérisée par le fait que** la douille expansible (12) présente à son extrémité opposée à l'extrémité située en avant une partie support (22) de diamètre supérieur au diamètre extérieur de la douille expansible (12) et dans laquelle est prévu au moins un évidement (24) dans lequel peut être mis en prise un appendice saillant de la pièce.

6. Cheville de fixation selon la revendication 5, **caractérisée par le fait qu'**à l'extrémité côté de manoeuvre de la tige (36) de l'élément de manoeuvre (14) est prévue une tête (16) de plus grand diamètre que la tige (36), s'appuyant sur la surface de la partie de plus grand diamètre de la douille expansible (12) et pourvue de moyens de rotation de l'élément de manoeuvre (14).

7. Cheville de fixation selon la revendication 6, **caractérisée par le fait que** sur l'élément de manoeuvre (14) est formé un appendice (46) saillant radialement de la tête (16) auquel est associée une saillie saillant de la face supérieure de la pièce comme contre-butée pour la limitation de la rotation de l'élément de manoeuvre (14) à un angle de moins de 360°.
